# EUROPEAN PATENT APPLICATION

(11) **EP 2 023 147 A2**
(43) Date of publication of application: **11.02.2009**
(21) Application number: 08013541.1
(22) Date of filing: 28.07.2008
(51) Int. Cl.: G01N 35/00

(54) **Automatic analyzer**

(30) Priority: 30.07.2007 JP 2007197508
(71) Applicant: Hitachi High-Technologies Corporation, Tokyo 105-8717 (JP)
(72) Inventor: Soma, Kunihiko, Hitachinaka-shi Ibaraki 312-8504 (JP); Mimura, Tomonori, Hitachinaka-shi Ibaraki 312-8504 (JP)
(74) Representative: Strehl Schübel-Hopf & Partner

(57) **Abstract**

An object of the present invention is to provide an automatic analyzer which measures blank values for each vessel to reduce analysis time.

The automatic analyzer comprises: a vessel for storing a sample and a reagent; a cleaning mechanism for cleaning the vessel and; an analysis mechanism for performing photometric inspection of reaction of the reagent and the sample; wherein the automatic analyzer includes a blank value comparison function for comparing a preceding blank value with a succeeding blank value. The preceding blank value is measured before photometric inspection of the reaction in the initial starting operation initially performed. The succeeding blank value is measured after photometric inspection of the reaction in the running operation subsequently performed after the initial starting operation.

## Description

### BACKGROUND OF THE INVENTION

### 1. Field of the Invention

The present invention relates to an automatic analyzer, and more particularly to an automatic analyzer which cleans a vessel and measures a vessel blank value.

### 2. Description of the Related Art

When a conventional automatic analyzer starts analysis from the standby state, the analyzer cleans a vessel used for analysis using water, detergent, or the like, dispenses a solution, such as water, into the cleaned vessel, and measures the absorbance of the vessel. Then, the analyzer generally uses the absorbance as a vessel blank value to correct a measurement value measured using the vessel.

However, the above-mentioned automatic analyzer needs to clean the vessel and measure the vessel blank value before starting absorbance measurement. Therefore, there arises a time difference since the analyzer starts operation until analysis is actually started. If the user needs to quickly obtain a result, for example, in measurement of an urgent sample, a delay time arises until the result is obtained. Japanese Patent No. 2537572 describes a method for using a corrected blank value to reduce the time it takes until analysis is started at the time of urgent inspection.

### SUMMARY OF THE INVENTION

However, the above-mentioned conventional technique applies the degree of blank value fluctuations of a specific vessel to all other vessels. Therefore, for example, if an automatic analyzer stops during analysis and some vessels have not been cleaned, these vessels remain contaminated possibly resulting in a different degree of blank value fluctuations from that of a reference vessel.

Therefore, it is demanded that a blank value be obtained for each vessel used for analysis and that time it takes for analysis be reduced.

In view of the above-mentioned problem, an object of the present invention is to provide an automatic analyzer which measures blank values for each vessel to reduce analysis time.

An automatic analyzer according to the present invention comprise: a vessel for storing a sample and a reagent; a cleaning mechanism for cleaning the vessel; and an analysis mechanism for performing photometric inspection of reaction of the reagent and the sample; wherein the automatic analyzer includes a blank value comparison function for comparing a preceding blank value with a succeeding blank value. The preceding blank value is measured before photometric inspection of the reaction in the initial starting operation initially performed. The succeeding blank value is measured after photometric inspection of the reaction in the running operation subsequently performed after the initial starting operation.

The automatic analyzer according to the present invention compares a preceding blank value with a succeeding blank value. The preceding blank value is measured before photometric inspection of the reaction in the initial starting operation initially performed. The succeeding blank value is measured after photometric inspection of the reaction in the running operation subsequently performed after the initial starting operation. In this way, the automatic analyzer can measure the blank values for each vessel and reduce analysis time.

### BRIEF DESCRIPTION OF THE DRAWINGS

Fig. 1 is a schematic view of an automatic analyzer according to an embodiment of the present invention.
Fig. 2 is an enlarged view of a related portion including a reaction compartment according to an embodiment of the present invention.
Fig. 3 is a flowchart showing the initial starting operation of the automatic analyzer according to an embodiment of the present invention.
Fig. 4 is a flowchart showing the running operation of the automatic analyzer according to an embodiment of the present invention.
Fig. 5 is a flowchart according to another embodiment of the present invention.

### DETAILED DESCRIPTION OF THE PREFERRED EMBODIMENTS

Embodiments of the present invention will be explained below with reference to the accompanying drawings.

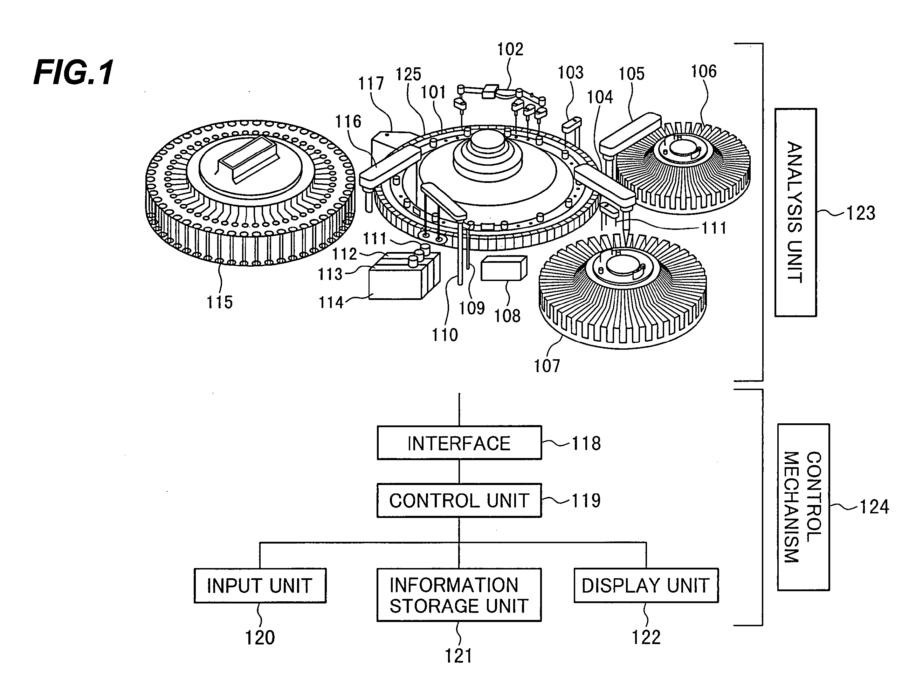

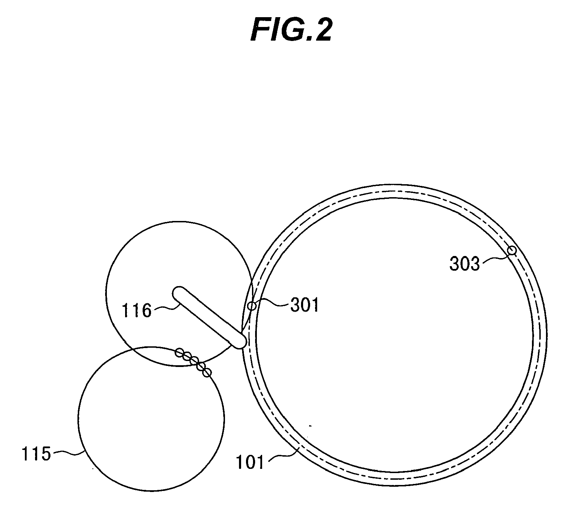

Figs. 1 and 2 show embodiments of an automatic analyzer according to the present invention.

The automatic analyzer comprises an analysis unit 123 and a control mechanism 124.

The analysis unit 123 includes a sample compartment 115, reagent compartments 106 and 107, and vessels 101. The sample compartment 115 holds a plurality of sample vessels and functions as a sample moving unit to position each sample vessel at a sample suction position. The reagent compartments 106 and 107 hold a plurality of reagent vessels related to analysis items and functions as a reagent moving unit to position each reagent vessel at a reagent suction position. The vessels 101 are used for reacting a sample and a reagent.

The analysis unit 123 further includes a reaction compartment 125, a sample pipetting mechanism 116, reagent pipetting mechanisms 104 and 105, and a stirring mechanism 103. The reaction compartment 125 has a plurality of vessels 101 circularly arranged thereon and functions as a reaction line. The sample pipetting mechanism 116 has a sample dispensing probe for dispensing a sample into a vessel 101. The reagent pipetting mechanisms 104 and 105 dispense a reagent into the vessel 101. The stirring mechanism 103 stirs the dispensed sample and reagent to mix them.

The analysis unit 123 further includes an electrolyte measurement unit 108, a shipper mechanism 109, a pipetting mechanism for electrolyte (110), a reagent vessel for reference solution (112), a reagent vessel for diluted solution (113), and a reagent vessel for comparative electrode solution (114).

The analysis unit 123 further includes a multi-wavelength photometer 117 for measuring the absorbance of a reaction liquid in the vessel 101; and a cleaning mechanism 102 provided along with the reaction compartment 125 to clean the vessel 101.

The control mechanism 124, which controls operation and screen display of each of the above-mentioned mechanisms, includes an interface 118, a control unit 119, an input unit 120, an information storage unit 121, and a display unit 122.

The reaction compartment 125 is controlled by the control unit 119 so as to repeat turning and stopping operation by a train of predetermined number of vessels for each cycle. The multi-wavelength photometer 117 includes a plurality of detectors at positions associated with wavelengths to be detected. While the reaction compartment 125 is rotating, each of the detectors detects light penetrating the content in a vessel. In this measurement with penetrating light, the analyzer performs photometric inspection of a sample reacted in a vessel, measurement of blank values, and the like.

The following describes analytical operation of a sample at the time of colorimetric analysis with a common automatic analyzer.

When a start switch for starting analytical operation provided in the interface 118 is pressed, the vessel cleaning mechanism 102 starts to clean a vessel 101 and a blank solution is then poured into the vessel to measure a blank value. The measured blank value serves as a reference of the absorbance subsequently measured with the vessel 101.

When a cleaned sample vessel advances to a sample dispensing position 301 as a result of one-cycle operation, i.e., repetitions of fixed-distance movement and stop of the reaction compartment 125, a sample vessel moves to the sample dispensing position. At the same time, each of the reagent compartments 106 and 107 moves such that a reagent for a related analysis item is positioned at a reagent suction position.

Then, the sample pipetting mechanism 116 becomes operative to suck a sample from a sample vessel and then discharges a predetermined amount of sample into the vessel 101. At the same time, the reagent pipetting mechanism 104 becomes operative to suck a reagent disposed on the reagent compartment 106.

Then, the reagent pipetting mechanism 104 moves to a relevant vessel 101 on the reaction compartment 125 and then discharges a predetermined amount of reagent sucked and held. Then, the reagent pipetting mechanism 104 is cleaned by a cleaning mechanism (not shown) and then prepared for subsequent reagent dispensing. After the reagent pipetting mechanism 104 dispenses a reagent, measurement by the multi-wavelength photometer is started.

The analyzer performs photometric inspection when the vessel 101 crosses a light flux during rotation of the reaction compartment 125. After a reagent is added, the vessel 101 moves to a stirring position 303 and the stirring mechanism 103 becomes operative to stir the sample and the reagent.

Then, a reagent is added into the vessel 101 by a reagent pipetting mechanism 105. Then, the mixture is stirred by a stirring mechanism 111. While the reaction compartment 125 is rotating, the vessels 101 cross a light flux one after another. Each time the vessel 101 crosses the light flux, the absorbance for each reaction liquid is measured. Each vessel 101 subjected to measurement is cleaned by the vessel cleaning mechanism 102 and then prepared for subsequent sample measurement.

The concentration or enzyme activity value are calculated from the absorbance obtained through photometric inspection, and an analysis result is displayed on the display unit 122.

The control mechanism 124 includes the control unit 119, the input unit 120 for inputting information, the information storage unit 121 for storing the information, and the display unit 122 for displaying measurement data. The control mechanism 124 controls a colorimetric analysis unit and an electrolyte analysis unit through the interface 118.

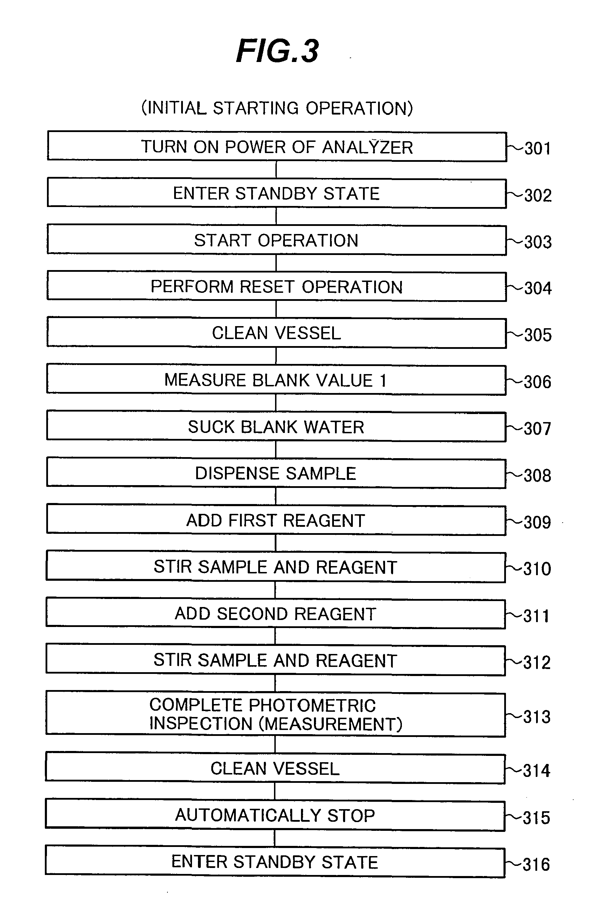

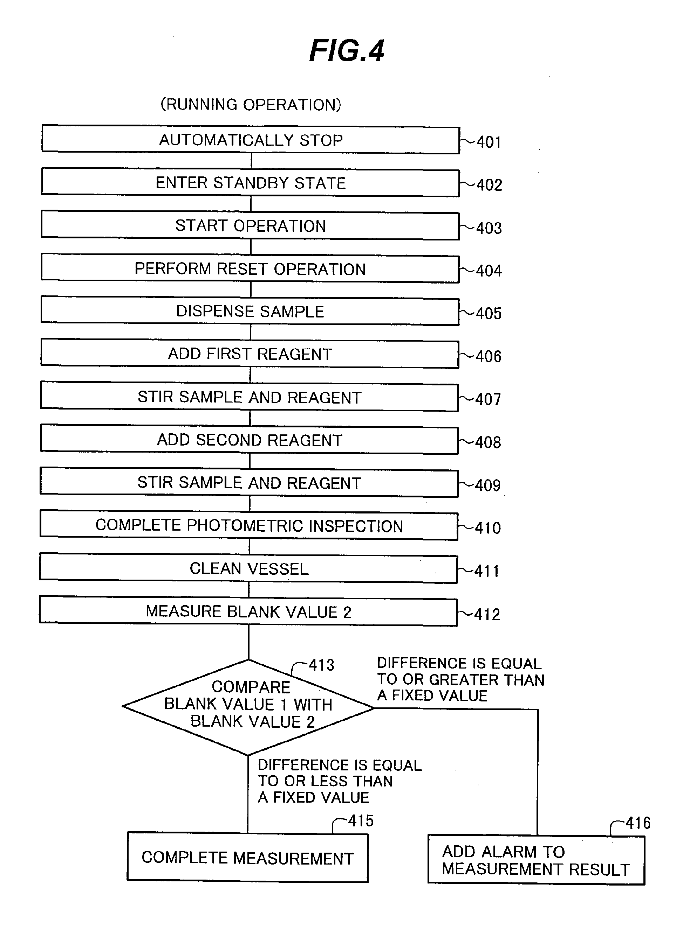

Operations of the automatic analyzer according to an embodiment of the present invention will be explained below with reference to flowcharts shown in Figs. 3 and 4.

First, the initial starting operation shown in Fig. 3 will be explained below.

The power of the analyzer is turned ON (Step 301) and the analyzer enters the standby state (Step 302). When the start switch for starting analytical operation is pressed through the interface 118, a command for starting operation is given to the analyzer (Step 303). Then, the analyzer performs the steps of reset operation (Step 304) and vessel cleaning (Step 305).

The analyzer discharges cleaning water (filling) and sucks the cleaning water (drainage) before and after the step of cleaning a vessel, respectively.

After the vessel has been cleaned, the analyzer measures a first blank value (Step 306) and sucks blank solution (Step 307). Then, the vessel is emptied. The step of measuring the first blank value (Step 306) is referred to as measurement of preceding blank value.

At least about four minutes is spent for measurement of preceding blank value including the steps of cleaning a vessel, sucking blank solution (Step 307), and pouring and discharging the blank solution into and from the vessel.

Following Step 307, the analyzer dispenses a sample (Step 308); adding a first reagent (Step 309), stirs the sample and the reagent (Step 310), adds a second reagent (Step 311), and stirs the sample and the reagent (Step 312). Then, the analyzer performs and completes photometric inspection (Step 313).

Then, the analyzer cleans the vessel (Step 314), automatically stops (Step 315), and enters the standby state (Step 316). In this way, the initial starting operation is complete through the above steps and the analyzer prepares for the running operation.

In the above-mentioned blank value measurement and photometric inspection in the running operation, blank values for all wavelengths that can be utilized by the automatic analyzer are measured by the multi-wavelength photometer 117. The thus-obtained first blank value and photometric inspection data are stored in the information storage unit 121.

The control unit 119 uses the first blank value as a reference absorbance such that the concentration or enzyme activity value is calculated from the absorbance obtained through photometric inspection, and its analysis result is displayed on the display unit 122.

The running operation of the analyzer shown in Fig. 4 will be explained below.

In a normal case, the steps of the running operation are repetitively performed after the initial starting operation. The steps of automatically stopping (Step 401) and entering the standby state (Step 402) correspond to the end of the initial starting operation and running operation performed previously.

The analyzer starts the running operation (Step 403) and performs reset operation (Step 404). Then, the analyzer dispenses a sample (Step 405), adds a first reagent (Step 406), stirs the sample and the reagent (Step 407), adds a second reagent (Step 408), and stirs the sample and the reagent (Step 409). Then, the analyzer performs photometric inspection (Step 410).

Then, following photometric inspection (Step 410), the analyzer cleans the vessel (Step 411) and measures a second blank value (Step 412). The step of measuring the second blank value (Step 412) is referred to as measurement of a succeeding blank value.

In Step 412, the preceding blank value (first blank value) is compared with the succeeding blank value (second blank value) by means of the comparison function of the control mechanism 124. If the difference between the first and second blank values falls within a fixed value, the analyzer completes operation (Step 414). If the difference between the first and second blank values is equal to or greater than the fixed value, the analyzer adds an alarm to the measurement result (Step 415).

When each of the above-mentioned steps is completed, the analyzer completes the running operation; then, returns to the steps of automatically stopping (Step 401) and entering the standby state (Step 402).

Before photometric inspection (Step 410) in the running operation, the steps of cleaning a vessel and measuring a blank value to be performed before photometric inspection in the initial starting operation are omitted, as mentioned above. Therefore, the time it takes until the completion of photometric inspection (Step 410) in the running operation is shorter than the time it takes until the completion of the same step in the initial starting operation by four minutes, which corresponds to a period of time that it takes to perform the steps of cleaning a vessel and measuring a blank value.

The running operation practically completes at the end of photometric inspection (Step 410). The steps of cleaning a vessel, measuring a blank value, and sucking blank solution performed before photometric inspection (Step 410) in the initial starting operation are used as the steps of confirming the validity of the result of photometric inspection (Step 410) and preparing for the subsequent running operation.

After the photometric inspection (Step 410) has substantially been completed, when the steps of cleaning a vessel, measuring a blank value, and confirming the validity of the result of photometric inspection (Step 410) are being performed, the analyzer has already started the subsequent running operation.

That is, while the running operation is repeated in succession, the analyzer performs related steps in parallel with the steps of the subsequent running operation. The related steps include the steps of cleaning a vessel, measuring a succeeding blank value, and comparing the blank values. Therefore, the time spent for analysis by the analyzer can be remarkably reduced through a number of repeated running operations.

Further, each individual photometric inspection is ensured through the step of comparing blank values for validation of measurement result, thus providing high-reliability measurement.

The above-mentioned steps of measuring a blank value and adding an alarm will be explained below.

A vessel 101 subjected to absorbance measurement is cleaned by the vessel cleaning mechanism 102. Then, a blank value of the vessel 101 is measured as a second blank value for all wavelengths by the multi-wavelength photometer 117.

Here, the control unit 119 compares the first blank value of the vessel 101 with the second blank value thereof for all wavelengths or a specific wavelength. If the difference between the first and second blank values falls within a fixed value, the analyzer completes operation. If the difference between the first and second blank values is equal to or greater than the fixed value, an alarm is displayed on the display unit 122 or an alarm is added to the measurement result to notify the user of the result of comparison.

If the difference between the first and second blank values is equal to or greater than a fixed value, the second blank value is used to calculate the absorbance again. If a measurement result calculated using the absorbance is different from that calculated using the first blank value, a measurement result calculated using the second blank value can be displayed together with that calculated using the first blank value.

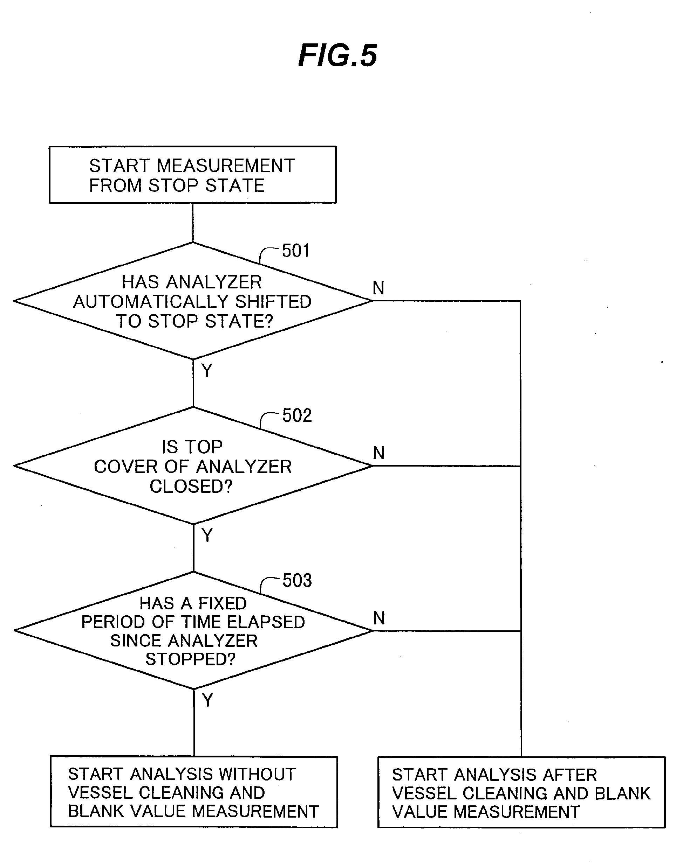

Another embodiment of the present invention will be explained below with reference to Fig. 5.

In the above-mentioned embodiment, the following judgment is made when a vessel 101 is used without cleaning the vessel 101 and measuring a blank value, thus improving the reliability of the automatic analyzer.

If the automatic analyzer automatically stops after completion of vessel cleaning, the steps of cleaning a vessel and measuring a blank value are normally performed. However, if the user stops the automatic analyzer at any timing or if the analyzer stops because of a failure, the steps of cleaning the vessel and measuring the blank value may not have been completed.

Then, the analyzer starts absorbance measurement without performing the steps of cleaning a vessel and measuring a blank value only when the automatic analyzer automatically stops after completion of vessel cleaning and blank value measurement, thus avoiding measurement value fluctuations caused by a contaminated vessel or the like (Step 501).

The blank value fluctuations may be caused by a foreign substance incorporated in the vessel 101. Normally, the automatic analyzer is provided with a cover at the top of the vessel 101 to prevent a foreign substance from entering the automatic analyzer.

However, with a conventional automatic analyzer, start of absorbance measurement is not disturbed even if the cover is removed. Also with the conventional automatic analyzer, even in the case where measurement is started with the cover removed and a foreign substance enters a vessel, performing the steps of cleaning a vessel and measuring a blank value before absorbance measurement allows the vessel to be used for the measurement.

However, in a case where the steps of cleaning a vessel and measuring a blank value are not performed in order to quickly perform measurement like the present invention, a measurement value may be affected by a foreign substance in a vessel.

To solve the above-mentioned problem, the analyzer according to the present invention checks whether or not the cover is open while the analyzer is operative or in the stop state. In the case where the analyzer starts operation when the cover is open, the analyzer cleans a vessel and measures a blank value. In the case where the analyzer starts analysis from the stop state only when the cover is closed, the analyzer omits the steps of cleaning a vessel and measuring a blank value (Step 502).

If absorbance measurement is restarted or if a fixed period of time has elapsed after the automatic analyzer completes absorbance measurement and then stops, the blank value may remarkably change from the time when the automatic analyzer stopped because of degraded light source or isothermal water.

Then, if a fixed period of time has elapsed since the automatic analyzer stopped, the analyzer can also measure a blank value or perform other processing before starting absorbance measurement. The period of time since the analyzer stopped may be a predetermined fixed period of time or input by the user from the interface (Step 503).

## Claims

1. An automatic analyzer comprising:
a vessel for storing a sample and a reagent;
a cleaning mechanism for cleaning the vessel and;
an analysis mechanism for performing photometric inspection of reaction of the reagent and the sample;
wherein the automatic analyzer includes a blank value comparison function for comparing a preceding blank value with a succeeding blank value, the preceding blank value being measured before photometric inspection of the reaction in the initial starting operation initially performed, and the succeeding blank value being measured after photometric inspection of the reaction in the running operation subsequently performed after the initial starting operation.

2. The automatic analyzer according to Claim 1, wherein:
in the running operation, related steps are performed between the step of photometric inspection of the reaction and the step of measuring the succeeding blank value, the related steps including the step of cleaning the vessel.

3. The automatic analyzer according to Claim 2, wherein:
when the running operation is repetitively performed in succession, the automatic analyzer performs related steps in parallel with the steps of the subsequent running operation, the related steps including the steps of cleaning the vessel, measuring the succeeding blank value, and comparing the blank values performed along with photometric inspection of the reaction.

4. The automatic analyzer according to Claim 1, wherein:
if the result of comparison of the preceding blank value with the succeeding blank value exceeds a fixed value, the automatic analyzer calculates a measurement value of photometric inspection using the succeeding blank value.

5. The automatic analyzer according to Claim 1, wherein:
if the result of comparison of the preceding blank value with the succeeding blank value exceeds a fixed value, the automatic analyzer adds an alarm to a measurement result.

6. The automatic analyzer according to Claim 1, wherein:
the steps of cleaning the vessel and measuring the preceding blank value to be performed before photometric inspection of the reaction in the initial starting operation are omitted in the running operation.
